# EUROPEAN PATENT APPLICATION

(11) **EP 1 498 301 A2**
(43) Date of publication of application: **19.01.2005**
(21) Application number: 04016609.2
(22) Date of filing: 14.07.2004
(51) Int. Cl.: B60N 2/22, B60N 2/44

(54) **Adjusting mechanism for a support structure**

(30) Priority: 15.07.2003 DE 10332103
(71) Applicant: FICO CABLES LDA, 4471 Maia (PT)
(72) Inventor: da Silva Alves, Filipe, 4470-263 Vermoim-Maia (PT); Lopes Correia, Leonel Jorge, 4470-263 Vermoim-Maia (PT)
(74) Representative: Hess, Peter K., Dipl.-Phys.

(57) **Abstract**

The present invention discloses an adjusting mechanism for a support structure of a seat of a vehicle comprising a first rotatable adjusting means 10 and at least one engaging means 30 displaceable by means of the rotation of the first adjusting means 10 from a neutral position to a connecting position in such a way that it engages in a second rotatable adjusting means 50 in said connecting position, wherein by the rotation of the first adjusting means 10 first the engaging means 30 is engageable into the second adjusting means 50 by a linear motion and then the second adjusting means 50 is adjustable by this rotation.

## Description

### 1. Field of the invention

The present invention relates to an adjusting mechanism for a support structure in seats of vehicles.

### 2. Background of the invention

In order to enhance the comfort of a seat of a vehicle, in particular of a back of a seat of a vehicle, different support structures are installed in these backs of seats. These support structures are mostly adapted to the back shape of the seated person in order to provide this person on the one hand a rest and on the other hand a sufficient support for the natural back shape. Such support structures are mostly predetermined in their shape and they only slightly give way based on their resilient properties. Other support structures are adaptable by means of an adjusting mechanism to different needs of the seated person.

By means of known adjusting mechanisms, on the one hand the arcing of the support structure, particularly in the area of the lumbar spine, can be adapted. A further function of these adjusting mechanisms consists in the shifting of the support structure in height parallel to the running direction of the backbone. In this manner, it is possible to optimally adapt the support structure of the back of a seat to seated persons having different size.

Constructions of seats of vehicles comprise an adjustably mounted back of a seat wherein the slope of which can be adapted to the needs of the seated person by means of a mechanism. These mechanisms are described in the WO 02/058958 A1. First, these mechanisms release the arrested connection between the back of the seat and the seating to enable an adjusting. As soon as the desired position has been adjusted, these mechanisms arrest or block the back of the seat of the vehicle so that even in the case of an accident of the vehicle, security risks for the seated person are minimized.

Compared to the above mentioned mechanisms for the back of a seat, also adjusting mechanisms for the inner support structure are realized in seats of vehicles. These adjusting mechanisms serve for the adjustment of arching mechanics mostly arranged in the area of the back of a seat. These adjusting mechanisms for the support structures serve for the task to enable a step-by-step adjusting to the desired position of the support structure so that no or not only an arresting is realized, but mainly an adjusting movement is transmitted to the support structure to be adjusted.

Different adjusting mechanisms for the back of a seat in vehicle seats are disclosed in the US-A-4 805 481, the US-A-2 395 576 and in the US-A-4 143 905. The US-A-4 805 481 discloses a space consuming adjusting mechanism since the driving motion and the adjusting motion are transmitted via remotely of each other arranged pivot axis. A more compact arrangement is described in the remaining US patents. In these arrangements, the adjusting mechanism is adjusted from an initial position in which no adjusting is possible, to an engaging position, in which an adjusting is possible, via a main pivot axis. Subsequently, an adjusting of the back of the seat is realized by means of the continuing rotation around the main pivot axis while the adjusting mechanism is still in the engaging position. As soon as the adjusting process is finished, i.e. the rotation around the main pivot axis ends, the adjusting mechanism is returned to the initial position by a slight opposite rotating around the main pivot axis compared to the previous rotation.

The crossover from the initial position to the engaging position of the adjusting mechanism is realized by the coupling of a rotation around the main pivot axis to a rotation around different additional axis. The rotation around the additional axis engages the engagement means of different construction with an outer adjusting element. The provision of different additional axis is connected to high constructive efforts and thus also to high manufacturing efforts. Besides this manufacturing effort, the main axis and the additional axis have to be expensively serviced in order to guarantee a long lasting functioning of the adjusting mechanism. Additionally, the adjusting mechanisms disclosed in the above mentioned US patents consist of a plurality of components, thus the assembly of which is also very time-consuming. Further, the plurality of components leads to a high weight of the adjusting mechanisms which especially in vehicles affects the fuel consumption and the consideration of security risks in the case of an accident.

It is therefore the technical problem of the present invention to provide an adjusting mechanism for a support structure in a seat of a vehicle which is constructively simply configured, which can be manufactured with limited efforts and which requires less maintenance.

### 3. Summary of the invention

The above problem is solved by an adjusting mechanism as defined in claim 1 as well as by a method as defined in claim 9.

The adjusting mechanism according to the invention for a support structure of a seat of a vehicle comprises a first rotatable adjusting means and at least one engaging means displaceable from a neutral position to a connecting position by means of a rotation of the first adjusting means in such a way that it engages within a second rotatable adjusting means in the connecting position wherein by means of the rotation of the first adjusting means first the engaging means is engageable with the second adjusting means by a linear motion and then the second adjusting means is adjustable by this rotation.

Referring to the above discussed prior art of the coupling of several rotations to adjust support structures or the like, in the present invention a coupling between a rotational motion and a linear motion takes place. This coupling or this connection realized by means of a linear motion serves for the purpose to provide a connection between a first and a second adjusting means based on a simple constructive and space saving arrangement in order to adjust the second adjusting means by means of a rotation fed to the first adjusting means. By using a linear connecting or a coupling motion, additional pivot points have not to be provided. Further, this arrangement can be cost-effectively manufactured and it requires low efforts in maintenance compared to known adjusting mechanisms of the prior art.

According to a first embodiment of the adjusting mechanism according to the invention, at least one engaging means is arranged adjacent an inclined plane of the first adjusting means in such a way that the at least one engaging means is displaceable during a rotation of the first adjusting means based on the effect of the inclined plane from a neutral position to a connecting position in which the at least one engaging means engages within a second adjusting means and in which the at least one engaging means adjusts the second adjusting means by means of the first adjusting means.

The rotation executed by the first adjusting means is preferably according to the invention transmitted to the second adjusting means for adjusting a support structure of a seat of a vehicle. To this end, an engaging means carries out a linear motion between these two adjusting means and therefore connects the two adjusting means to each other. The linear motion of the engaging means is preferably according to the invention realized by the fact that the engaging means cooperates with an inclined plane. This inclined plane is preferably according to the invention arranged in said rotatable first adjusting means. In case the first adjusting means rotates, the one end of the engaging means moves along the run of the inclined plane and it is displaced in this manner. This displacing is carried out in the direction of the second adjusting means whereby after the engagement within said second adjusting means a connection between the first and the second adjusting means is realized. After this connection has been established, the second adjusting means executes preferably according to the invention the same rotational movement as the first adjusting means. In this manner, a quick, effective and reliable coupling between the first and the second adjusting means is realized by simple means. Additionally, this adjusting mechanism forms a module of low maintenance having low weight for seats of vehicles based on the small number of individual parts and on their production from wear resistant and lightweight material. This corresponds to the requirements in the construction of vehicles and it contributes to the reduction of fuel consumption.

According to a further preferred embodiment of the present invention, the at least one engaging means is a pin element engaging a recess in the second adjusting means in the connecting position.

This pin element comprises preferably according to the invention a low axial extent to limit the space requirements of the adjusting mechanism. This pin element, one end of which cooperating preferably according to the invention with the above mentioned inclined plane, is axially displaced by means of the inclined plane by the rotation of the first adjusting means so that it engages within the second adjusting means. Preferably according to the invention, a recess is provided to this end in the second adjusting means forming a positive connection with the engaging pin element. By means of this preferred positive connection according to the invention, the rotation of the second adjusting means is guaranteed by means of the first adjusting means. It is also preferred according to the invention to realize the connection between the engaging means and the second adjusting means by a non-positive connection. In this case, the touching surfaces of the engaging means and of the second adjusting means are configured in such a way that a high frictional coefficient guarantees a reliable non-positive connection.

Furthermore preferred according to the invention, the adjusting mechanism comprises a guiding element having a guiding, wherein by the effect of a reset spring within said guiding the at least one engaging means is reset from a connecting position to the neutral position.

As described above, the engaging means is displaced by the cooperation with said inclined plane in the direction of the second adjusting means. After finishing the rotation of the second adjusting means by means of the first adjusting means, the engaging means returns in the scope of a reset motion to its neutral position. This reset motion to the neutral position is carried out preferably to the invention by the effect of a reset spring arranged within the guiding of the guiding element. This reset spring starts its action as soon as the engaging means is no longer pressed in the direction of the second adjusting means by the inclined plane. Because of this reason, the reset spring guarantees preferably according to the invention two functions. On the one hand, it makes sure that the engaging means permanently abuts preferably according to the invention upon the inclined plane within the first adjusting means. On the other hand, the reset spring guarantees that the engaging means is reset to its neutral position by this simple construction as soon as the adjusting motion of the first adjusting means is finished.

According to a further preferred embodiment, the present invention comprises a housing having at least two stop elements wherein the first adjusting means in connection with the second adjusting means is limited in its rotation by the abutment of the guiding element upon one of the at least two stop elements.

The adjusting mechanism according to the invention is accommodated in a housing to protect the same for outer influences as for example contamination or mechanical impact. Further, the housing provides preferably according to the invention at least two stop elements limiting the adjusting motion of the adjusting mechanism to a maximum angle. Preferably according to the invention, the adjusting motion, i.e. the rotation of the first adjusting means, is executed either in the one or the other direction. According to the requirements of the support structure in a seat of a vehicle, the adjusting angle in both directions comprises respectively maximally 90°. The limiting of this adjusting angle is realized by the arrangement according to the invention of stop elements within the housing of the adjusting mechanism according to the invention. These stop elements prevent a rotation of the guiding element beyond the predetermined maximum adjusting angle. Since the guiding element is connected via the engagement means with the first and the second adjusting means during the adjusting motion, in this manner also the motion of both adjusting means is limited.

Preferably according to the invention, the first adjusting means is maximally adjustable around an angle of 90° in both directions.

According to a further preferred embodiment of the present invention, the adjusting mechanism comprises a positioning spring so that the guiding element is reset to an initial position together with the first adjusting means.

Based on the above mentioned maximum adjusting angle, the adjusting mechanism can only carry out the adjustment of a support structure of a seat of a vehicle in a step-by-step process. After such a step has finished, the first adjusting means returns in its initial position assisted by the guiding element. This resetting motion is generated by a positioning spring which is mounted preferably according to the invention on the housing and which turns back the guiding element to its initial position. At the beginning of this reset motion, the connection between the first and the second adjusting means is released by means of the reset spring of the engaging means so that only the guiding element is reset together with the first adjusting means and the engaging means to the initial position. By the return to the initial position, it is guaranteed preferably according to the invention that a new adjusting step in the one or the other direction can be carried out.

According to further preferred embodiment of the present invention, the housing comprises a shifting mechanism having a spindle and at least one nut to adjust at least one connected bowden cable.

Preferably according to the invention, said shifting mechanism is arranged in the housing of the adjusting mechanism to provide a space saving and compact arrangement for the respective seat of a vehicle in the configuration of a module. This spindle of the shifting mechanism comprises preferably according to the invention a right hand and a left hand threads respectively starting at the end of the spindle and running inwardly. On these oppositely turning threads, respectively one nut is arranged moving during the rotation of the spindle to each other or away from each other. By this movement of the nuts, preferably according to the invention connected bowden cables are tightened or released. An effective and reliable adjustment of a support structure of a seat of a vehicle follows therefrom connected to the adjusting mechanism according to the invention.

The present invention further comprises a method for adjusting a support structure of a seat of a vehicle comprising the following steps: rotating a first adjusting means having at least one inclined plane from an initial position around a first angle so that an engaging means cooperating with said inclined plane is displaced from a neutral position to a connecting position by a linear motion and thereby establishes a connection between the first and a second adjusting means; and rotating of the first adjusting means around a second angle so that the second adjusting means is displaced together with said first adjusting means.

### 4. Short description of the accompanying drawings

The present invention is described with reference to the accompanying drawings. It shows:
- Figure 1: the adjusting mechanism according to a preferred embodiment of the present invention in an exploded view;
- Figure 2: the adjusting mechanism according to a preferred embodiment of the present invention in a side view in a partly sectional illustration;
- Figure 3: the adjusting mechanism according to a preferred embodiment in a side view in a partly sectional illustration;
- Figure 4: the adjusting mechanism according to a preferred embodiment of the present invention in a plan view in a partly sectional illustration;
- Figure 5: the adjusting mechanism according to a preferred embodiment according to the present invention in a perspective view;
- Figure 6: the adjusting mechanism according to a preferred embodiment of the present invention in a perspective view with no first adjusting means; and
- Figure 7: the adjusting mechanism according to a preferred embodiment of the present invention in a perspective view in a partly sectional illustration.

### 5. Detailed description of the preferred embodiments

The present invention provides an adjusting mechanism for support structures of seats of vehicles. It is however also preferred according to the invention to use the adjusting mechanism in other seat structures which are optimally adapted to the seated person by means of support structures and by the adjusting mechanisms connected thereto. Known adjusting mechanisms use different rotating parts which are coupled to each other for adjustment.

In opposite thereto, the adjusting mechanism according to the present invention provides a space saving and effective arrangement, coupling a rotation with a linear motion to achieve an adjustment of support structures in seats of vehicles. The adjusting mechanism according to the invention provides a step-by-step adjusting process. The maximum step size in which the adjustment is executed, is determined in this case by the adjusting mechanism wherein the actual step size can be also smaller as desired by the actuating person. The adjusting mechanism provides a limited motional freedom in the one or the other adjusting direction whereby the maximum adjusting steps or intervals are defined. Although the actuation of the adjusting mechanism is a step-by-step process, the adjustment of the support structure is continuously carried out by the adjusting mechanism according to the present invention.

A rotation forms the adjusting motion of the adjusting mechanism according to the present invention which is preferably fed to the adjusting mechanism by the seated person by means of the motion of a lever or a rotating knob or the like. The lever (not shown) moves preferably according to the invention a first rotatable adjusting means 10 first effecting a linear motion of an engaging means 30. By the motion of the engaging means 30, a coupling or a connection to a second rotatable adjusting means 50 is realized. This second rotatable adjusting means 50 transmits by its motion the adjusting motion to the support structure to be adjusted in a seat of a vehicle. Based on the coupling between the first 10 and the second adjusting means 50 by means of a linear coupling or a connecting motion, a constructively simple, space saving and effective adjusting mechanism for support structures in seats of vehicles is provided. Additionally, the decoupling between the first adjusting means 10 and the second adjusting means 50 guarantees in the initial position of the adjusting mechanism according to the invention that the support structure is not adjusted by small, undesired movements of the lever or the rotating knob (not shown).

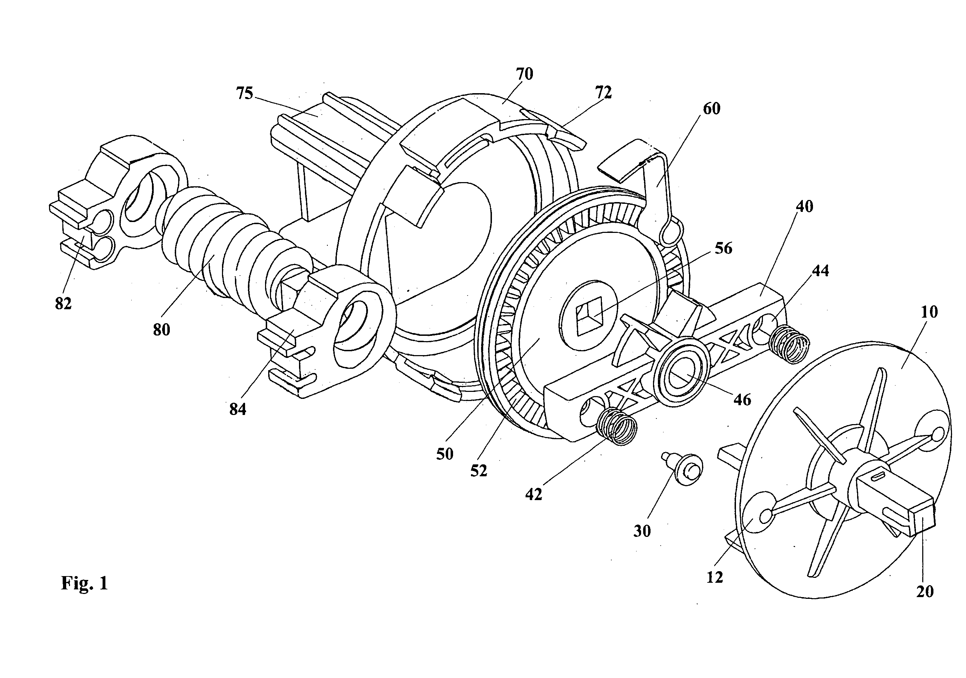

According to a first preferred embodiment of the adjusting mechanism according to the invention, the first rotatable adjusting means 10 is configured like a disk and it is connected to a first shaft 20. The adjusting mechanism according to a preferred embodiment of the present invention is shown in an exploded view in Figure 1. The first shaft 20 is preferably according to the invention actuated by means of the above mentioned lever, a rotating knob or an electric actuating unit (not shown). Since the first shaft 20 is connected to the first adjusting means 10, in this manner a rotation is transmitted to the first adjusting means 10. The first shaft 20 also projects beyond the inner side of the first adjusting means 10 to engage a central opening 46 in a guiding element 40 (confer Figs. 1, 3 and 7).

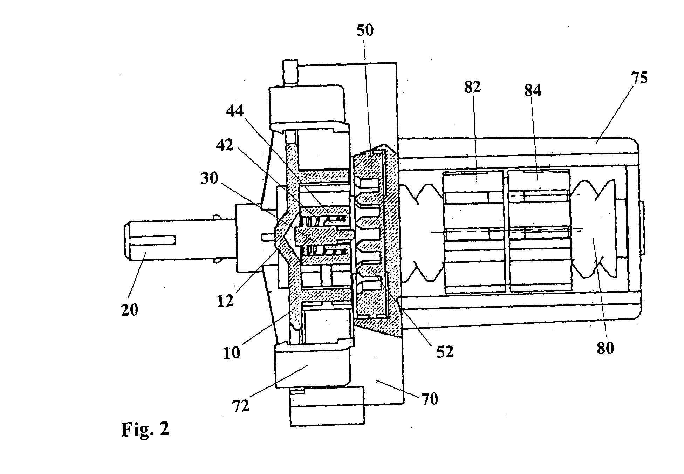

The inner side of the disk like first adjusting means 10 is directed to the remaining parts of the adjusting mechanism according to the invention and it comprises preferably according to the invention inclined planes 12. These inclined planes 12 are according to a preferred embodiment of the present invention formed by funnel-shaped recesses at the inner side of the first adjusting means 10. It is also preferred according to the invention, to form these inclined planes by recesses of different configuration as long as they enable a linear displacement of an engaging means 30, as described later. The inclined planes 12 cooperate with the engaging means 30 (confer Figs. 1 and 2).

Preferably according to the invention, the engaging means 30 has a pin-like shape or it is elongated configured. The engaging means 30 serves for executing a preferred linear motion according to the invention in an axial direction and to provide in this manner a coupling or a connection between the first adjusting means 10 and the second adjusting means 50. Preferably according to the invention, one end of the engaging means 30 is arranged adjacent the inclined plane 12 in a neutral position. In case a rotation of the first adjusting means 10 is carried out, the inclined plane 12 is shifted or displaced with respect to the end of the engaging means 30. This displacement causes that the engaging means 30 abuts upon the inclined plane 12 and that it is displaced based on the run of the inclined plane 12 in an axial direction of the second rotatable adjusting means 50. It follows therefrom that the motion of the inclined plane 12 effects the linear motion of the engaging means 50 for connecting or coupling the first adjusting means 10 with the second adjusting means 50. Dependent on the slope of the inclined plane 12, the length of the way is determined via which a displacement of the engaging means 30 in the direction of the second adjusting means 50 is carried out.

The linear motion of the engaging means 30 leads to an engagement of the engaging means 30 within the second adjusting means 50. Preferably according to the invention, to this end recesses 52 are arranged in the second adjusting means 50 so that a positive connection is formed between the engaging means 30 and the second adjusting means 50 (confer Figs. 1 to 3). In order to support the above mentioned connection, the second adjusting means 50 is preferably according to the invention configured like a disk wherein the recesses 52 having radially oriented intermediate walls 54 are circumferentially arranged. Preferably according to the invention, the intermediate walls 54 taper in the direction of the engaging means 30 in order to support an engagement of the engaging means 30 in this manner.

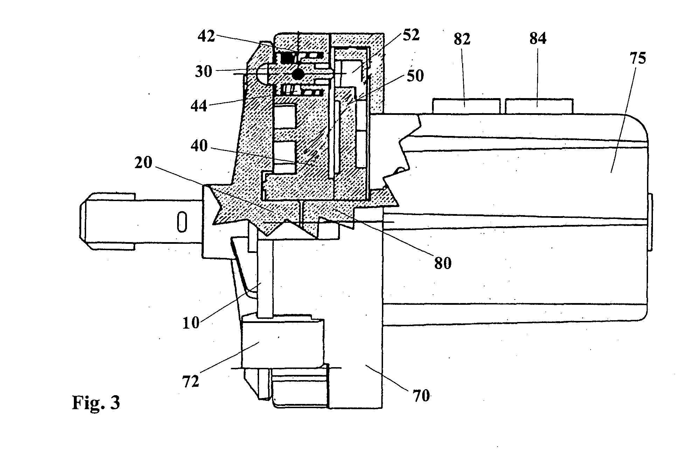

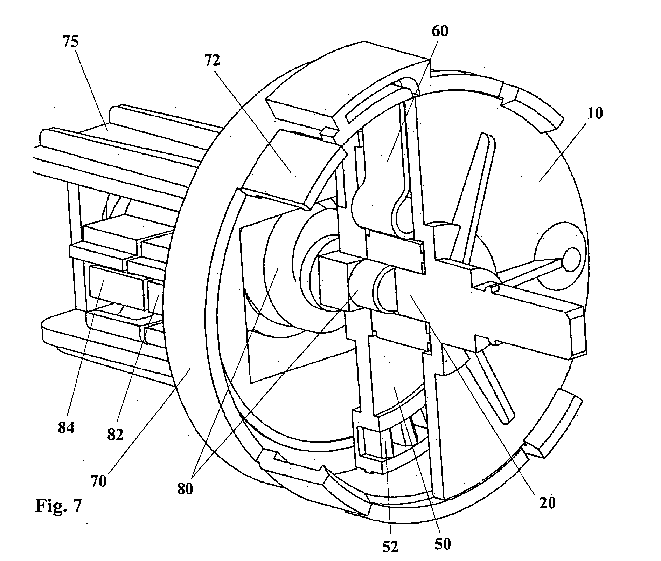

It is also preferred according to the present invention to realize a non-positive connection between the engaging means 30 and the second adjusting means 50. In this case, the touching surfaces of the engaging means 30 and of the second adjusting means 50 are configured with a sufficient high frictional coefficient so that a sliding of the engaging means 30 onto the second adjusting means 50 is nearly completely prevented during the adjusting motion. To guarantee a trouble-free engagement of the engaging means 30 in the recess 52 of the second adjusting means 50, a guiding element 40 is preferably according to the invention arranged between the first adjusting means 10 and the second adjusting means 50. As already mentioned above, the guiding element 40 comprises a central opening 46 in which on the one hand the first shaft 20 and on the other hand the spindle or the second shaft 80 are guided. This is shown in the Figures 3 and 7. The guiding element 40 further comprises preferably according to the invention at least one guiding 44 having a reset spring 42 in which said engaging means 30 is guided. Within this guiding 44, the engaging means 30 carries out preferably according to the invention the above described linear motion for connecting the first adjusting means 10 with the second adjusting means 50.

According to a first preferred embodiment, the first adjusting means 10 is rotated around a first angle by means of said first shaft 20. Based on the rotation around the first angle, the inclined plane 12 is displaced with respect to the adjacent arranged end of the engaging means 30. The displacement of the inclined plane 12 leads to a shifting of the engaging means 30 within the guiding 44 of the guiding element 40. By the inclined plane 12, the engaging means 30 is shifted so far in the direction of the second adjusting means 50 that it engages within the recess 52 in the second adjusting means 50 and thereby provides the already above discussed positive connection between the first adjusting means 10 and the second adjusting means 50. This positive connection provides at the same time a coupling or a connection between the first adjusting means 10 and the second adjusting means 50 so that the adjusting motion of the first adjusting means 10 is transmitted to the second adjusting means 50.

After a preferred coupling according to the invention has been established, the first adjusting means 10 is rotated around a second angle. Based on the coupling, the second adjusting means 50 is also rotated around this second angle wherein this motion is transmitted as the axial adjusting motion to the second shaft 80 or the spindle 80. This transmission to the spindle or the second shaft 80 is guaranteed by a central opening 56 within the second adjusting means 50. The opening 56 provides preferably according to the invention a positive connection to the spindle 80 or the second shaft 80 so that preferably according to the invention shifting mechanisms or support structures can be connected with low efforts to the adjusting mechanism according to the invention.

As already mentioned above, the adjusting motion of the adjusting mechanism according to the invention is carried out by a step-by-step process. The maximum step size is preferably according to the invention determined by the arrangement of a stop element 72 in the housing 70 of the adjusting mechanism. The stop elements 72 limit the rotation of the first adjusting means 10 and of the second adjusting means 50 in the following manner. After the first adjusting means 10 and the second adjusting means 50 have been coupled by the rotation around the first angle by means of the engaging means 30, the guiding element 40 executes together with the first adjusting means 10 and the second adjusting means 50 the adjusting motion or the rotation. The guiding element 40 has such a length that it collides with or abuts upon a stop element 72 after the rotation around a certain turning angle and thereby prevents the further rotation. The maximum rotation angle allowed by the preferred adjusting mechanism according to the invention comprises approximately 90°, wherein the rotation around this rotation angle can be carried out either in the one or the other direction. It is also preferred according to the invention to make this rotation angle smaller than 90° in order to optimally adapt the adjusting mechanism according to the invention to the support structure to be adjusted and to the step size to be adjusted in this manner. The actuating person has additionally not to use the whole available step size. It can also use arbitrary angles smaller than 90° to operate the adjusting mechanism in a step-by-step process and to continuously adjust the connected support structure.

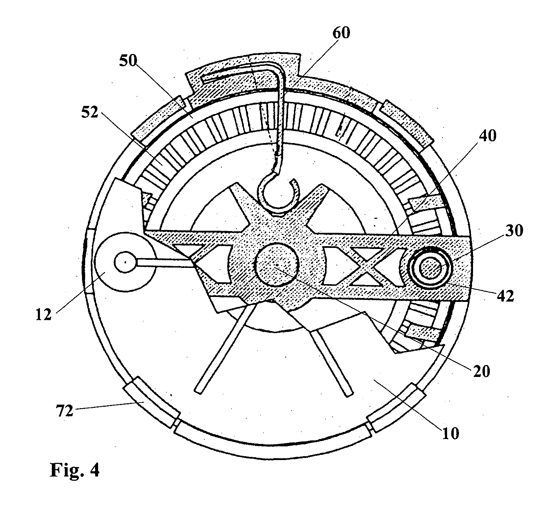

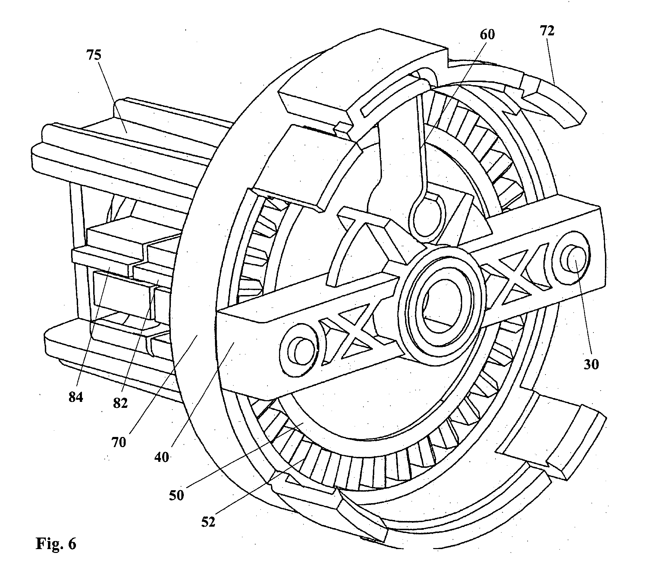

In case an adjusting motion or an adjusting step has been executed by means of the preferred adjusting mechanism according to the invention, a positioning spring 60 realizes the return of the guiding element 40 to the initial position. The positioning spring 60 is mounted to this end at the housing 70 and it biases the guiding element 40 (confer Figs. 1, 4, 6, 7). The return of the guiding element 40 to the initial position is preferred according to the invention to execute the further adjusting motion or a further adjusting step in the one or the other direction. At the beginning of the returning motion of the guiding element 40 to the initial position, first the connection of the coupling between the first adjusting means 10 and the second adjusting means 50 is released. This releasing is realized by the fact that the engaging means 30 is no longer pressed in the direction of the second adjusting means 50 by means of the inclined plane 12. Because of this reason, the reset spring 42 arranged within the guiding 44 of the guiding element 40 can remove the engaging means 30 from the recess 52 of the second adjusting means 50. After the release of the connection between the first adjusting means 10 and the second adjusting means 50, the positioning spring 60 rotates the guiding element 40 back to the initial position. While this return motion, the first adjusting means is also returned to the initial position by means of the guiding element 40 and the engaging means 30 contained in the guidings 44, since the engaging means 30 provides a connection between the guiding element 40 and the first adjusting means 10 by its engagement within the funnel-shaped openings with the inclined planes 12. It follows therefrom that also the lever or the rotating knob connected to the first shaft 20 is returned to its initial position and that now a new adjustment in one of both directions can be carried out. It is also preferred according to the invention to configure the positioning spring 60 in another shape as long as the return of the guiding element 40 and of the connected first adjusting means 10 is guaranteed.

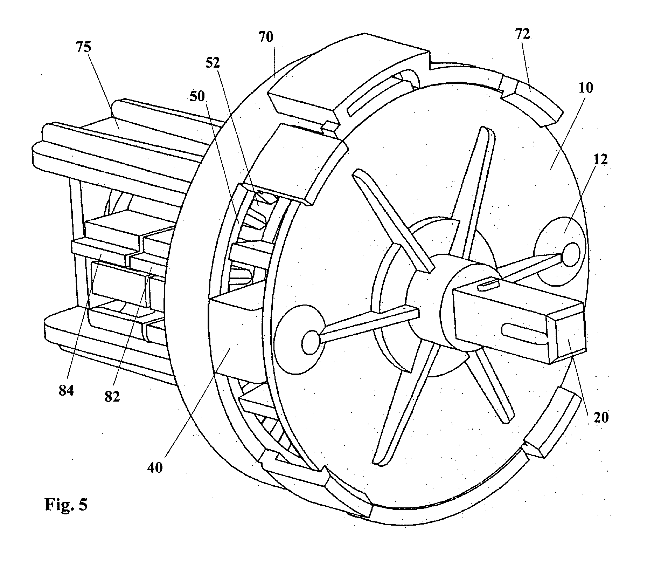

The housing 70 already mentioned above is bowl-like configured to approximately accurately receive the first adjusting means 10, the second adjusting means 50 and the guiding element 40 as shown according to a preferred embodiment of the present invention in Figures 2 to 7. To realize a space saving and cost effective construction having low weight, the first adjusting means 10 serves as a housing cover latched by means of the stop elements 72 at the housing 70. This latching serves on the one hand for the closing of the housing 70 and on the other hand for the rotatably mounting of the first adjusting means 10.

The adjusting mechanism according to the invention serves for the adjusting of support structures in seats of vehicles. To this end, it is preferred according to the invention to connect the adjusting mechanism to a shifting mechanism as shown in Figure 1. This shifting mechanism comprises preferably according to the invention a spindle 80 including two oppositely turning threads. On this right hand thread and on this left hand thread respectively a nut 82, 84 is guided. In case the spindle 80 is rotated via the second adjusting means 50 by means of the preferred adjusting mechanism according to the invention, the nuts 82, 84 are continuously moved to each other or away from each other dependent on the rotation direction. The nuts 82, 84 comprise mounting devices for bowden cables or other connections so that by the motion of the nuts the bowden cables or other connections are displaced to effect an adjustment.

## Claims

1. An adjusting mechanism for a support structure of a seat of a vehicle comprising:
a. a first rotatable adjusting means (10) and at least one engaging means (30) which is displaceable by means of a rotation of the first adjusting means (10) from a neutral position to a connecting position, so that
b. the at least one engaging means (30) engages within a second rotatable adjusting means (50) in the connecting position, wherein by the rotation of the first adjusting means (10), first the engaging means (30) is engageable within the second adjusting means (50) by a linear motion and then the second adjusting means (50) is adjusted by this rotation.

2. The adjusting mechanism according to claim 1, wherein the at least one engaging means (30) is arranged adjacent an inclined plane (12) of the first adjusting means (10) in such a way that the at least one engaging means (30) is displaceable from the neutral position to the connecting position during the rotation of the first adjusting means (10) by the effect of the inclined plane (12) wherein in the connecting position the at least one engaging means (10) engages within the second adjusting means (50) and wherein by means of the first adjusting means (10) the second adjusting means (50) is adjusted.

3. The adjusting mechanism according to claim 1, wherein the at least one engaging means (30) is a pin element engaging within at least one recess (52) of the second adjusting means (50) in the connecting position.

4. The adjusting mechanism according to claim 1, further comprising a guiding element (40) having a guiding (44) wherein by the effect of a reset spring (42) arranged within the guiding (44) the at least one engaging means (30) is reset from the connecting position to the neutral position.

5. The adjusting mechanism according to claim 4, further comprising a housing (70) having at least two stop elements (72) wherein the first adjusting means (10) connected to the second adjusting means (50) is limited in its rotation by the abutment of the guiding element (40) upon one of the at least two stop elements (72).

6. The adjusting mechanism according to claim 5, wherein the first adjusting means (10) is displaceable around an angle of maximum 90° in both directions.

7. The adjusting mechanism according to claim 4, further comprising a positioning spring (60) so that the guiding element (40) is resettable together with the first adjusting means (10) to an initial position.

8. The adjusting mechanism according to claim 5, wherein the housing (70, 75) comprises a shifting mechanism having a spindle (80) and at least one nut (82, 84) to adjust at least one connected bowden cable.

9. A method for adjusting a support structure of a seat of a vehicle, comprising the following steps:
a. rotating of a first adjusting means (10) having at least one inclined plane (12) from an initial position around a first angle so that an engaging means (30) cooperating with the inclined plane (12) is displaced from a neutral position to a connecting position by a linear movement and thereby establishes a connection between the first (10) and a second adjusting means (50), and
b. rotating the first adjusting means (10) around a second angle so that the second adjusting means (50) is displaced together with the first adjusting means (10).
